# EUROPÄISCHE PATENTSCHRIFT

(11) **EP 2 927 096 B1**
(45) Veröffentlichungstag und Bekanntmachung des Hinweises auf die Patenterteilung: **16.05.2018**
(21) Anmeldenummer: 15158434.9
(22) Anmeldetag: 10.03.2015
(51) Int. Cl.: B62D 11/24, B62D 11/00, B62D 11/20, B62D 11/18

(54) **LENKBARES RAUPENFAHRWERK**
STEERABLE TRACK ASSEMBLY
CHENILLE ORIENTABLE

(30) Priorität: 01.04.2014 DE 102014104549
(43) Veröffentlichungstag der Anmeldung: 07.10.2015
(73) Patentinhaber: CLAAS Selbstfahrende Erntemaschinen GmbH, 33428 Harsewinkel (DE)
(72) Erfinder: Claas, Helmut, Dr., 33428 Harsewinkel (DE); Dückingaus, Heinrich, 33649 Bielefeld (DE); Obermeier-Hartmann, Robert, 33142 Büren (DE)

(56) Entgegenhaltungen:
- EP-A1- 2 113 446
- US-A- 2 336 911

## Beschreibung

Die Erfindung betrifft ein lenkbares Raupenfahrwerk nach dem Oberbegriff des Anspruchs 1.

Raupenlaufwerke werden im Stand der Technik üblicherweise gelenkt, indem zwischen den rechts- und linksseitig an einem Fahrzeug angeordneten Raupenschiffen eine Drehzahldifferenz erzwungen wird, wobei das kurveninnere Raupenschiff langsamer als das kurvenäußere Raupenschiff umläuft. Weit verbreitet sind derartige Systeme unter anderem in Raupenfahrwerkkonzepten für Raupentraktoren, im Bauwesen eingesetzten sogenannten Planierraupen und im Bereich der Militärtechnik bei Panzerfahrzeugen.

Die für Kurvenfahrten notwendige Drehzahldifferenz der rechts- und linksseitigen Raupenschiffe wird bei sogenannten Lenkbremskonzepten dadurch bewirkt, dass die den Raupen zugeordneten Bremsen individuell in der Weise ansteuerbar sind, dass die jeweils kurveninnere Raupe gebremst wird, sodass das Fahrzeug eine Dreh- und damit Lenkbewegung um diese Raupe ausführt. Der vergleichsweise einfache Aufbau derartige Lenksysteme führt aber zu einer Reihe gravierender Nachteile.

Neben einem erhöhten Verschleiß an den Bremsen generieren derartige Systeme hohe Verlustleistungen. Zudem sind derartige Lenkungen nicht feinfühlig betreibbar, was ihrer Verwendung für Fahrzeuge, die mit hohen Fahrgeschwindigkeiten betrieben werden entgegensteht.

Diese Nachteile überwindend sind aus dem Stand der Technik, wie etwa in US 2,336,911 oder US 2,377,354 beschrieben, Differentiallenkungen bekannt geworden, die einen hydrostatischen Antrieb umfassen und dessen Verstellpumpen in Kombination mit Hydromotoren den Raupenschiffen eines Fahrzeugs unterschiedliche Geschwindigkeiten aufzwingen können, wobei die Verstellpumpen die Hydromotoren unabhängig voneinander mit Fluid versorgen. Sind die Hydromotoren entsprechend dimensioniert können derartige Raupenfahrwerke im Stillstand des Fahrzeugs gelenkt werden. Diese umfassende Funktionalität, häufig auch durch die Verwendung von Planetenübertragungsgetrieben bewirkt, führt zu einem hohen maschinenbaulichen Aufwand und damit zu hohen Kosten und einem großen Bauraumbedarf. Zudem generieren so strukturierte Lenksysteme unter anderem wegen der voneinander unabhängigen Versorgung der Hydromotoren mit dem Hydraulikmedium nennenswerte Verlustleistungen. Die EP 2 113 446 A1 offenbart die Merkmale des Oberbegriffs des unabhängigen Anspruchs 1. Es ist deshalb Aufgabe der Erfindung die beschriebenen Nachteile des Standes der Technik zu vermeiden und insbesondere eine Lenkstruktur für Raupenfahrwerke zu schaffen, die kostengünstig herstellbar ist und dennoch energieeffizient arbeitet. Diese Aufgabe wird erfindungsgemäß durch die kennzeichnenden Merkmale des Anspruchs 1 gelöst.

Indem das einer Fahrzeugachse zugeordnete lenkbare Raupenfahrwerk ein rechtsseitiges und ein linksseitiges Raupenschiff umfasst, die über ein Leistungsverzweigungsgetriebe gekoppelt sind und die den Raupenschiffen zugeordneten Achsabschnitte mit Hydromotoren in Wirkverbindung stehen, wobei lenkwinkelabhängig die Schluckvolumina der Hydromotoren in der Weise änderbar sind, dass das aus dem einen Hydromotor verdrängte Hydraulikmedium dem weiteren Hydromotor zugeführt wird, lässt sich eine kostengünstige und energieeffiziente Raupenlenkung realisieren.

Auf technisch einfache Weise lässt sich die notwendige Drehzahldifferenz der die Raupenschiffe antreibenden Hydromotoren bewirken, wenn der kurveninnere Hydromotor ein größeres Schluckvolumen und der kurvenäußere Hydromotor ein kleineres Schluckvolumen aufweist. Dies bewirkt, dass das kurveninnere Raupenschiff langsamer als das kurvenäußere Raupenschiff umläuft.

In einer vorteilhaften Ausgestaltung der Erfindung lässt sich die die Lenkung des Fahrzeugs unterstützende Umverteilung der dem Raupenfahrwerk zur Verfügung stehenden Antriebsenergie dadurch bewirken, dass die Antriebsenergie über ein der Fahrzeugachse zugeordnetes Leistungsverzweigungsgetriebe auf die jeweils ein Raupenschiff aufnehmenden Achsabschnitte übertragen wird und wobei jedem Achsabschnitt eine mit dem jeweiligen Hydromotor gekoppelte Getriebestufe zugeordnet ist.

Eine bauraumsparende Umsetzung der Erfindung wird in einer vorteilhaften Weiterbildung der Erfindung dann erzielt, wenn die jeweilige Getriebestufe als Stirnradstufe ausgebildet ist. Dieser Effekt wird auch dadurch noch unterstützt, wenn die den Achsabschnitten zugeordneten Hydromotoren in einem geschlossenen hydraulischen Kreislauf miteinander verbunden sind.

Damit die Energieverluste bei Geradeausfahrt minimiert werden ist in einer vorteilhaften Ausgestaltung der Erfindung vorgesehen, dass bei gleichem Schwenkwinkel der in den geschlossenen hydraulischen Kreislauf integrierten Hydromotoren die Drehzahl der Raupenschiffe gleich ist.

Indem der die Fahrgeschwindigkeit der Arbeitsmaschine bestimmende Fahrantrieb von der Geschwindigkeitsänderung der rechts- und linksseitigen Raupenschiffe bei Kurvenfahrt nicht beeinflusst wird ist in einer vorteilhaften Ausgestaltung der Erfindung sichergestellt, dass der Lenkvorgang nicht zu Lasten der Fahrgeschwindigkeit geht.

Um ein Austausch des Öls im geschlossenen Kreislauf zu ermöglichen ist in an sich bekannter Weise zudem vorgesehen, dass dem geschlossenen Hydraulikkreislauf über eine externe Druckquelle Hydraulikmedium zuführbar ist.

Gemäß einer weiteren vorteilhaften Ausgestaltung der Erfindung ist vorgesehen, dass die der Arbeitsmaschine zugeordnete Betriebsbremse die Lenkbewegung unterstützt, indem die Raupenschiffe unabhängig voneinander abbremsbar sind.

In einer weiteren vorteilhaften Ausgestaltung der Erfindung ist vorgesehen, dass die Ansteuerung der Hydromotoren eine Schlupfkompensation bewirkt. Dies hat unter anderem den Effekt, dass die erfindungsgemäße Raupenlenkung bodenbedingte Störeinflüsse auf die Lenkung eines Fahrzeugs kompensieren, zumindest jedoch minimieren kann.

Zudem kann die hochpräzise Ansteuerung der Raupenschiffe in einer weiteren vorteilhaften Ausgestaltung der Erfindung auch für den sogenannten Controlled Trafic, ein hochgenaues Abfahren von Fahrtrouten auf einem Feld eingesetzt werden.

In einer weiteren vorteilhaften Ausgestaltung der Erfindung kann das Leistungsverzweigungsgetriebe entweder als Differentialgetriebe oder als leistungsverzweigter hydraulischer Fahrantrieb ausgestaltet sein, wobei bei letzterem jedem Achsabschnitt eine Hydropumpe zugeordnet ist. Erste Ausgestaltung hat vorallem den Vorteil, dass hier eine kostengünstige und bauraumsparende Struktur erreicht wird. Eine Ausführung als hydrostatischer Fahrantrieb hat demgegenüber den Vorteil, dass die die Raupenschiffe antreibenden Komponenten unmittelbar in dem jeweiligen Raupenschiff positioniert werden können, sodass sich im Bereich der Fahrzeugsachse zusätzlicher Bauraum für andere Elemente ergibt.

Weitere vorteilhafte Ausgestaltungen sind Gegenstand weiterer Unteransprüche und werden nachfolgend an Hand in mehreren Figuren dargestellter Ausführungsbeispiele beschrieben. Es zeigen:
- Figur 1: eine schematische Ansicht einer als Mähdrescher ausgeführten landwirtschaftlichen Arbeitsmaschine mit Raupenfahrwerk
- Figur 2: eine erste Detailansicht der erfindungsgemäßen Lenkung für Raupenfahrwerke
- Figur 3: eine weitere Detailansicht der erfindungsgemäßen Lenkung für Raupenfahrwerke nach Figur 2

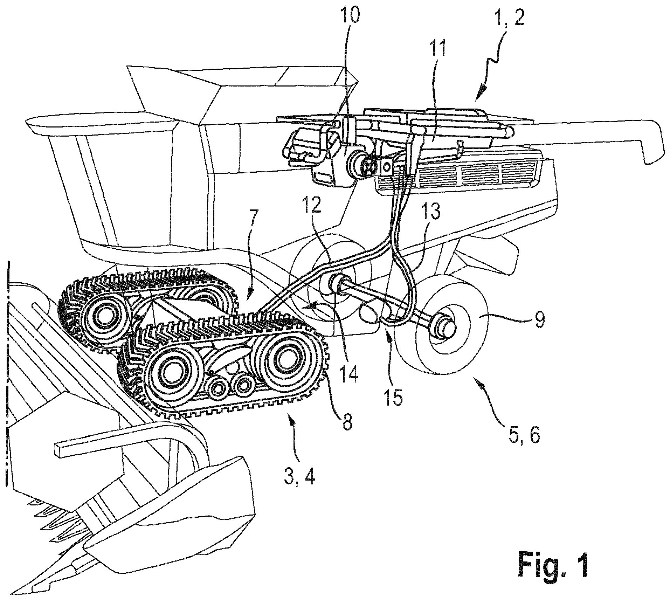

Figur 1 zeigt eine als Mähdrescher 2 ausgeführte Arbeitsmaschine 1, deren Vorderachse 3 als Raupenfahrwerk 4 und deren Hinterachse 5 als Radachse 6 ausgeführt sind. Es liegt im Rahmen der Erfindung, dass die Arbeitsmaschine 1 auch als Feldhäcksler, Traktor oder sonstige selbstfahrende Arbeitsmaschine, wie etwa als Bau- und Forstfahrzeug ausgeführt sein kann. Das Raupenfahrwerk 4 umfasst eine noch näher zu erläuternde zentrale Antriebseinheit 7, die jeweils rechts- und linksseitig ein Raupenschiff 8 aufnimmt. Im hier dargestellten Beispiel sind die Vorderachse 3 und die Hinterachse 5 jeweils hydraulisch angetrieben, wobei es im Rahmen der Erfindung liegt, dass der Antrieb der Achsen 3, 5 auch mechanisch ausgeführt sein kann und gegebenenfalls auch nur die Vorderachse 3 angetrieben wird. Weiter sind im hier dargestellten Ausführungsbeispiel nur die der Hinterachse 5 zugeordneten Laufräder 9 lenkbar, wobei es im Rahmen der Erfindung liegt, dass in an sich bekannter Weise alle Achsen 3, 5 der Arbeitsmaschine 1 gelenkt ausgeführt sein können. Zudem kann vorgesehen sein, dass alle Achsen 3,5 der Arbeitsmaschine 1 mit Raupenschiffen 8 oder auch nur die Hinterachse 5 anstelle der Vorderachse 3 mit Raupenschiffen 8 bestückt sind. Weiter verfügt die landwirtschaftliche Arbeitsmaschine 1 über einen Antriebsmotor 10, der mit zumindest einer zentralen hydraulischen Antriebseinheit 11 gekoppelt ist. Die zentrale hydraulische Antriebseinheit 11 fördert das Hydraulikmedium über Leitungssysteme 12, 13 zu Hydraulikeinheiten 14, 15, die der Vorder- und Hinterachse 3, 5 zugeordnet sind und die diese in noch näher zu beschreibender Weise antreiben und je nach Ausführungsart lenken.

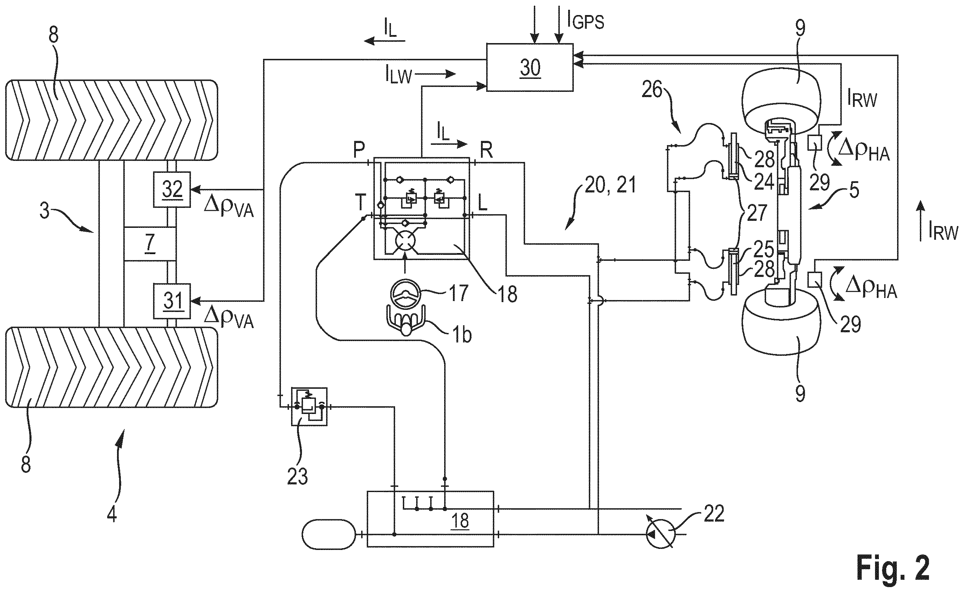

Figur 2 beschreibt die Antriebs- und Lenkstruktur der Vorderachse 3 und der Hinterachse 5 einschließlich der erfindungsgemäßen Lenkstruktur des der Vorderachse 3 zugeordneten Raupenfahrwerks 4 näher. Das von dem Bediener 16 der landwirtschaftlichen Arbeitsmaschine betätigbare Lenkrad 17 ist in an sich bekannter Weise mit einem sogenannten Orbitrol 18 gekoppelt, welches die Auslenkung des Lenkrades 17 in eine Steuerung der Durchflussmengen des Hydraulikmediums 19 durch den Lenkhydraulikkreislauf 20 bewirkt. Im dargestellten Ausführungsbeispiel umfasst der Lenkhydraulikkreislauf 20 zunächst einen Teilkreislauf 21, der die Lenkung der Laufräder 9 der Hinterachse 5 bewirkt. Dieser Teilkreislauf 21 umfasst zumindest eine Pumpeneinheit 22 zur Erzeugung des notwendigen Fluiddrucks, zumindest ein als Sicherheitsventil fungierendes Rückschlagventil 23, das Orbitrol 18, sowie je einen jedem Laufrad 9 zugeordneten Lenkzylinder 24, 25. Die Lenkzylinder 24, 25 sind mittels Leitungssystemen 26 so miteinander verbunden, dass jeweils die kolbenflächenseitige Kammer 27 des einen Lenkzylinders 24, 25 mit der kolbenstangenseitige Kammer 28 des anderen Lenkzylinders 25, 24 leitungsverbunden ist. Auf diese Weise wird sichergestellt, dass das von dem Orbitrol 18 generierte Lenksignal I_{L} alle Laufräder 9 der Hinterachse um denselben Lenkwinkel Δϕ_{HA} auslenkt. Im dargestellten Ausführungsbeispiel ist jedem Laufrad 9 ein Radwinkelsensor 29 zugeordnet, wobei die von dem jeweiligen Radwinkelsensor 29 generierten Radwinkelsignale I_{RW} einer Steuereinheit 30 zugeführt werden. In an sich bekannter Weise kann der Steuereinheit 30 über ein Lenkwinkelsignal I_{LW} auch die Auslenkung Δϕ des Lenkrades 17 mitgeteilt werden. Zudem ist es denkbar, dass der Steuereinheit 30 GPS-basierte Lenkwinkelsignale I_{GPS} übermittelt werden.

Erfindungsgemäß soll nun neben diesem bekannten und weit verbreiteten Lenkprinzip die Lenkung eines Raupenlaufwerks 4 vorgeschlagen werden, die eine hohe Funktionssicherheit aufweist und zudem kostengünstig ist. Im dargestellten Ausführungsbeispiel sind jedem der Vorderachse 3 zugeordneten Raupenschiffe 8 in noch näher zu beschreibender Weise Hydromotoren 31, 32 zugeordnet, die in Antriebsverbindung mit dem jeweiligen Raupenschiff 8 und der der Vorderachse 3 zugeordneten zentralen Antriebseinheit 7 stehen. In Abhängigkeit von den der Steuereinrichtung 30 zugeführten Signalen I, hier ein GPS-basiertes Lenkwinkelsignal I_{GPS}, das Radwinkelsignal I_{RW} und das in Abhängigkeit von der Position des Lenkrades 17 generierte Lenkwinkelsignal I_{LW}, wird von der Steuereinheit 30 schließlich ein Lenksignal I_{L} generiert, welches zu einer Drehzahldifferenz zwischen rechtem und linkem Raupenschiff 8 führt. Die sich ergebende Drehzahldifferenz ist dabei proportional zu einem virtuellen Lenkwinkel Δϕ_{VA} an der Vorderachse 3.

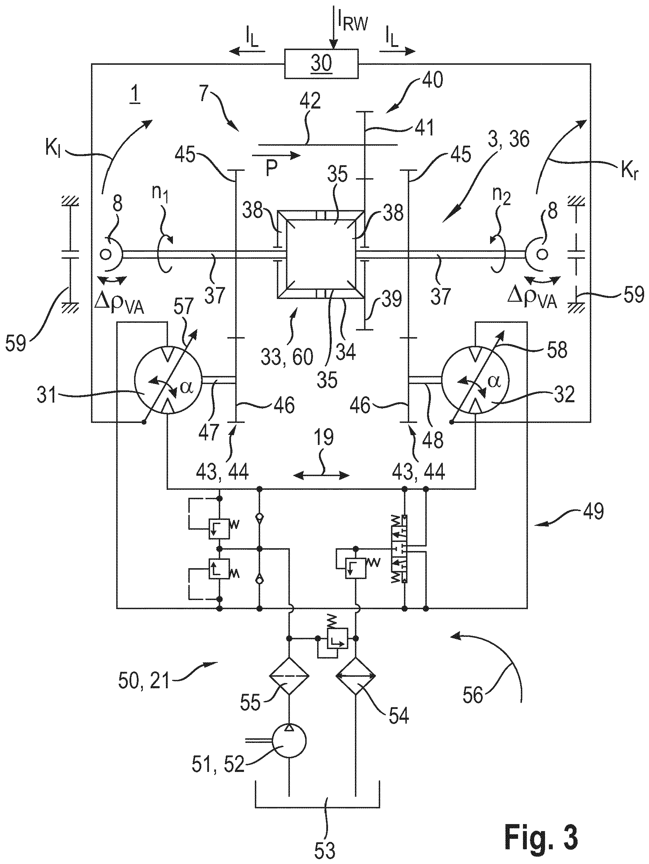

Figur 3 beschreibt nun die Erfindung im Detail. Der schematisch dargestellten, beidseitig Raupenschiffe 8 aufnehmenden Fahrzeugachse 36, hier der Vorderachse 3, ist in ihrem Mittenbereich die zentrale Antriebseinheit 7 zugeordnet. Im dargestellten Ausführungsbeispiel umfasst die zentrale Antriebseinheit 7 ein als Kegeldifferential ausgeführtes Differentialgetriebe 33, dessen umlaufender Differentialkorb 34 zwei sich gegenüberliegende Kegelzahnräder 35 drehbar aufnimmt. Die den Raupenschiffen 8 gegenüberliegenden Seiten des Differentialkorbs 34 werden von Achsabschnitten 37 durchsetzt, die jeweils einenends das rechts- oder linksseitige Raupenschiff 8 aufnehmen. Anderenends und im Inneren des Differentialkorbs 34 nimmt jeder Achsabschnitt 37 jeweils ein Kegelzahnrad 38 in der Weise drehfest auf, dass jeweils benachbarte Kegelzahnräder 35, 38 des Differentialgetriebes 33 miteinander kämmen. Der Differentialkorb 34 ist zudem drehfest mit einem Stirnrad 39 einer Stirnradstufe 40 verbunden, deren weiteres Stirnrad 41 mit der Getriebeeingangswelle 42 der der Vorderachse 3 zugeordneten zentralen Antriebseinheit 7 drehfest verbunden ist.

Jeder der Achsabschnitte 37 nimmt eine als Stirnradstufe 43 ausgeführte Getriebestufe 44 auf, deren eines Stirnrad 45 drehfest mit dem jeweiligen, das rechts-oder linksseitige Raupenschiff 8 aufnehmenden Achsabschnitt 37 verbunden ist. Das weitere Stirnrad 46 jeder Stirnradstufe 43 ist mit der Ausgangswelle 47, 48 des dem jeweiligen Raupenschiff 8 zugeordneten Hydromotors 31, 32 drehfest gekoppelt. Beide Hydromotoren 31 ,32 sind in einen geschlossenen Hydraulikkreislauf 49 integriert, wobei der geschlossene Hydraulikkreislauf 49 über einen an sich bekannten Speisekreis 50 mit Hydraulikmedium versorgt wird. Der Speisekreis 50 umfasst in an sich bekannter Weise eine, eine externe Druckquelle 51 bildende Hydraulikpumpe 52, einen Tank 53 sowie Ölkühl- und -filtersysteme 54, 55. Die Hydromotoren 31, 32 sind erfindungsgemäß so in den geschlossenen Hydraulikkreislauf 49 integriert, dass die Schluckvolumina der Hydromotoren 31, 32 lenkwinkelabhängig in der Weise änderbar sind, dass das aus dem einen Hydromotor 31, 32 verdrängte Hydraulikmedium dem weiteren Hydromotor 32, 31 zugeführt wird. Der geschlossene Hydraulikkreislauf 49 und der mit ihm gekoppelte Speisekreis 50 bilden einen zweiten hydraulischen Teilkreislauf 56 der landwirtschaftlichen Arbeitsmaschine 1, wobei es im Rahmen der Erfindung liegt, dass der Speisekreis Bestandteil des ersten Teilkreislaufs 21 sein kann.

In an sich bekannter Weise wird die an der Getriebeeingangswelle 42 anliegende Antriebsenergie P über die ihr zugeordnete Stirnradstufe 40 auf den Differentialkorb 34 des Differentialgetriebes 33 übertragen. Die im Inneren des Differentialkorbs 34 kämmenden Kegelzahnräder 35, 38 teilen schließlich die verfügbare Antriebsleistung P drehmomentabhängig über die Achsabschnitte 37 auf die jeweilige Raupenschiffe 8 auf. Je nach Gleichgewicht der wirkenden Kräfte und Momente werden sich die Achsabschnitte 37 mit gleicher oder unterschiedlicher Drehzahl n₁, n₂ drehen. Indem nun jedem Achsabschnitt 37 erfindungsgemäß eine mit einem Hydromotor 31, 32 gekoppelte Getriebestufe 43 zugeordnet ist, wobei das aus dem einen Hydromotor 31, 32 verdrängte Hydraulikmedium 19 dem jeweils anderen Hydromotor 32, 31 zugeführt wird, wird jeweils einem Raupenschiff 8 Antriebsenergie entzogen und dem jeweils anderen Raupenschiff 8 zugeführt. Im Ergebnis führt das dazu, dass der Achsabschnitt 37 und damit das ihm zugeordnete Raupenschiff 8, welchem die zusätzliche Antriebsenergie zugeführt wird schneller dreht und umgekehrt der Achsabschnitt 37 und das ihm zugeordnete Raupenschiff 8, dem die Antriebsenergie entzogen wurde langsamer dreht. Auf diese Weise unterstützen die Raupenschiffe 8 durch ihre unterschiedliche Laufgeschwindigkeit den Lenkprozess der landwirtschaftlichen Arbeitsmaschine, sie generieren somit einen virtuellen Lenkwinkel Δϕ_{VA}. Damit dies möglich wird sind die Stelleinheiten 57, 58 der Hydromotoren 31, 32 mit der Steuereinheit 30 signaltechnisch verbunden, sodass das von der Steuereinheit 30 generierte Lenksignal I_{L} an jede der Stelleinheiten 57, 58 übertragen werden kann. Die Hydromotor 31, 32 und das ihnen jeweils zugeführte Lenksignal I_{L} sind dabei so beschaffen, dass der kurveninnere Hydromotor 31, 32 ein größeres Schluckvolumen und der kurvenäußere Hydromotor 31, 32 ein kleineres Schluckvolumen aufweisen. Dies führt dazu, dass der kurveninnere Hydromotor 31, 32 eine niedriger Drehzahl n₁, n₂ als der kurvenäußere Hydromotor 32, 31 abgibt, sodass schließlich das kurveninnere Raupenschiff 8 mit geringerer Geschwindigkeit als das kurvenäußere Raupenschiff 8 umläuft und sich schließlich ein virtueller Lenkwinkel Δϕ_{VA} an der Vorderachse 3, 36 einstellt. Die Hydromotoren 31,32 sind zudem so beschaffen, dass bei gleichem Schwenkwinkel α der nicht dargestellten Steuerscheibe jedes Hydromotors 31, 32 die Drehzahl der der jeweiligen Fahrzeugachse 36 zugeordneten Raupenschiffe 8 gleich ist, das Fahrzeug 1 sich somit in Geradeausfahrt befindet.

Der von der die Raupenschiffe 8 tragenden Fahrzeugachse 36 generierte virtuelle Lenkwinkel Δϕ_{VA} muss gut dem tatsächlich, beispielsweise am Lenkrad 17 vorgewählten Lenkwinkelsignal I_{LW} entsprechen. Damit dies erreicht wird, ist in an sich bekannter und daher nicht detailliert dargestellter Weise vorgesehen, dass die Steuereinheit 30 zunächst aus dem vom Radwinkelsensor 29 generierten Radwinkelsignal I_{RW} die Bahnkurve des Fahrzeugs 1 unter Berücksichtigung des Kurvenradius und der Fahrzeuggeometrie berechnet. Sodann wird für das rechte und das linke Raupenschiff 8 eine spezifische Kurvenbahn Kₗ, Kᵣ ermittelt, wobei jede dieser Kurvenbahnen Kₗ, Kᵣ proportional zur Drehzahl n₁, n₂ des das jeweilige Raupenschiff 8 antreibenden Achsabschnitts 37 ist. Jeder dieser Drehzahlen n₁, n₂ entspricht einer Abtriebsdrehzahl des jeweiligen Hydromotors 31, 32, die durch Einstellung eines definierten Schwenkwinkels α am jeweiligen Hydromotor 31, 32 bewirkt wird, wobei große Schwenkwinkel α zu niedrigen Abtriebsdrehzahlen führen.

Weiter ist erfindungsgemäß vorgesehen, dass der die Fahrgeschwindigkeit der Arbeitsmaschine 1 bestimmende Fahrantrieb von der Geschwindigkeitsänderung der rechts- und linksseitigen Raupenschiffe 8 bei Kurvenfahrt nicht beeinflusst wird. Dies wird im einfachsten Fall dadurch erreicht, dass der erste hydraulische Teilkreislauf 21 unabhängig von dem erfindungsgemäßen weiteren Teilkreislauf 56 arbeitet. Die durch Drehzahländerung an den Raupenschiffen 8 bewirkte Unterstützung der Lenkbewegung des Fahrzeugs 1 kann in an sich bekannter Weise auch dadurch noch intensiviert werden, dass die den jeweiligen Achsabschnitten 37 zugeordneten Betriebsbremsen 59 partiell aktiviert werden.

In an sich bekannter Weise kann die Ansteuerung der Stelleinheiten 57, 58 durch die Steuereinrichtung 30 auch genutzt werden, um auftretendem Schlupf an den Raupenschiffen 8 zu kompensieren. Die mit der Erfindung mögliche feinfühlige Steuerung der Umlaufgeschwindigkeit der raupenschiffe 8 kann letztlich auch für eine sehr präzise Steuerung der Fahrspur der landwirtschaftlichen Arbeitsmaschine 1 auf dem Feld, wie dies für sogenannte Controlled-Trafic-Prozesse notwendig ist, herangezogen werden.

Weiter liegt es im Rahmen der Erfindung, dass das im dargestellten Ausführungsbeispiel als Differentialgetriebe 33 ausgeführte Leistungsverzweigungsgetriebe 60 auch als nicht dargestellter und an sich bekannter hydrostatischer Fahrantrieb ausgebildet sein kann. In diesem Fall ist jedem der Achsabschnitte 37, eine nicht dargestellte Hydropumpe zugeordnet, die das jeweilige Raupenschiff 8 mit Antriebsenergie versorgt.

**Bezugszeichenliste:**

| | | | |
|---|---|---|---|
| 1 | Arbeitsmaschine | 32 | Hydromotor |
| 2 | Mähdrescher | 33 | Differentialgetriebe |
| 3 | Vorderachse | 34 | Differentialkorb |
| 4 | Raupenfahrwerk | 35 | Kegelzahnrad |
| 5 | Hinterachse | 36 | Fahrzeugachse |
| 6 | Radachse | 37 | Achsabschnitt |
| 7 | Zentrale Antriebseinheit | 38 | Kegelzahnrad |
| 8 | Raupenschiff | 39 | Stirnrad |
| 9 | Laufräder | 40 | Stirnradstufe |
| 10 | Antriebsmotor | 41 | Stirnrad |
| 11 | hydraulische Antriebseinheit | 42 | Getriebeeingangswelle |
| 12 | Leitungssystem | 43 | Stirnradstufe |
| 13 | Leitungssystem | 44 | Getriebestufe |
| 14 | Hydraulikeinheit | 45 | Stirnrad |
| 15 | Hydraulikeinheit | 46 | Stirnrad |
| 16 | Bediener | 47 | Ausgangswelle |
| 17 | Lenkrad | 48 | Ausgangswelle |
| 18 | Orbitrol | 49 | geschlossener Hydraulikkreislauf |
| 19 | Hydraulikmedium | 50 | Speisekreis |
| 20 | Lenkhydraulikkreislauf | 51 | externe druckquelle |
| 21 | Teilkreislauf | 52 | Hydraulikpumpe |
| 22 | Pumpeneinheit | 53 | Tank |
| 23 | Rückschlagventil | 54 | Ölkühler |
| 24 | Lenkzylinder | 55 | Ölfilter |
| 25 | Lenkzylinder | 56 | Teilkreislauf |
| 26 | Leitungssystem | 57 | Stelleinheit |
| 27 | kolbenflächenseitige Kammer | 58 | Stelleinheit |
| 28 | kolbenstangenseitige Kammer | 59 | Betriebsbremse |
| 29 | Lenkwinkelsensor | 60 | Leistungsverzweigungsgetriebe |
| 30 | Steuereinheit | | |
| 31 | Hydromotor | | |
| I | Signal | | |
| I_{GPS} | GPS-basiertes Lenkwinkelsignal | | |
| I_{LW} | Lenkwinkelsignal | | |
| I_{RW} | Radwinkelsignal | | |
| I_{L} | Lenksignal | | |
| ΔϕHA | Lenkwinkel Hinterachse | | |
| ΔϕVA | Lenkwinkel Vorderachse | | |
| Δϕ | Auslenkung | | |
| P | Antriebsleistung | | |
| n₁, n₂ | Drehzahl | | |
| α | Schwenkwinkel | | |
| Kₗ, Kᵣ | Kurvenbahn links/rechts | | |

## Patentansprüche

1. Lenkbares Raupenfahrwerk ein einer Fahrzeugachse zugeordnetes rechtsseitiges und linksseitiges Raupenschiff umfassend, wobei die Fahrzeugachse zumindest ein Leistungsverzweigungsgetriebe aufnimmt und jeder einem der Raupenschiffe zugeordneten Achsabschnitte mit einem Hydromotor in Wirkverbindung steht,
**dadurch gekennzeichnet,**
**dass** lenkwinkelabhängig die Schluckvolumina der Hydromotoren (31, 32) in der Weise änderbar sind, dass das aus dem einen Hydromotor (31, 32) verdrängte Hydraulikmedium (19) dem weiteren Hydromotor (32, 31) zugeführt wird.

2. Lenkbares Raupenfahrwerk nach Anspruch 1,
**dadurch gekennzeichnet,**
**dass** der kurveninnere Hydromotor (31, 32) ein größeres Schluckvolumen und der kurvenäußere Hydromotor (32, 31) ein kleineres Schluckvolumen aufweist.

3. Lenkbares Raupenfahrwerk nach einem der vorhergehenden Ansprüche,
**dadurch gekennzeichnet,**
**dass** die Antriebsenergie (P) über ein der Fahrzeugachse (36) zugeordnetes Leistungsverzweigungsgetriebe (60) auf die jeweils ein Raupenschiff (8) aufnehmenden Achsabschnitte (37) übertragen wird und wobei jedem Achsabschnitt (37) eine mit dem jeweiligen Hydromotor (31,32) gekoppelte Getriebestufe (44) zugeordnet ist.

4. Lenkbares Raupenfahrwerk nach Anspruch 3,
**dadurch gekennzeichnet,**
**dass** die jeweilige Getriebestufe (44) als Stirnradstufe (43) ausgebildet ist.

5. Lenkbares Raupenfahrwerk nach Anspruch 3,
**dadurch gekennzeichnet,**
**dass** die den Achsabschnitten (37) zugeordneten Hydromotoren (31, 32) in einem geschlossenen hydraulischen Kreislauf (49) miteinander verbunden sind.

6. Lenkbares Raupenfahrwerk nach Anspruch 5,
**dadurch gekennzeichnet,**
**dass** bei gleichem Schwenkwinkel (α) der in den geschlossenen hydraulischen Kreislauf (49) integrierten Hydromotoren (31, 32) die Drehzahl der der jeweiligen Fahrzeugachse (36) zugeordneten Raupenschiffe (8) gleich ist.

7. Lenkbares Raupenfahrwerk nach einem der vorhergehenden Ansprüche,
**dadurch gekennzeichnet,**
**dass** der die Fahrgeschwindigkeit der Arbeitsmaschine (1) bestimmende Fahrantrieb von der Geschwindigkeitsänderung der rechts- und linksseitigen Raupenschiffe (8) bei Kurvenfahrt nicht beeinflusst wird.

8. Lenkbares Raupenfahrwerk nach einem der vorhergehenden Ansprüche,
**dadurch gekennzeichnet,**
**dass** dem geschlossenen Hydraulikkreislauf (49) über eine externe Druckquelle (51) Hydraulikmedium (19) zuführbar ist.

9. Lenkbares Raupenfahrwerk nach einem der vorhergehenden Ansprüche,
**dadurch gekennzeichnet,**
**dass** die der Arbeitsmaschine (1) zugeordnete Betriebsbremse (59) die Lenkbewegung unterstützt.

10. Lenkbares Raupenfahrwerk nach einem der vorhergehenden Ansprüche,
**dadurch gekennzeichnet,**
**dass** die Ansteuerung der Hydromotoren (31, 32) eine Schlupfkompensation bewirkt:

11. Lenkbares Raupenfahrwerk nach einem der vorhergehenden Ansprüche,
**dadurch gekennzeichnet,**
**dass** die Ansteuerung der Hydromotoren (31, 32) ein Controlled Trafic ermöglicht.

12. Lenkbares Raupenfahrwerk nach einem der vorhergehenden Ansprüche,
**dadurch gekennzeichnet,**
**dass** das Leistungsverzweigungsgetriebe (60) als Differentialgetriebe (33) oder als hydraulischer Fahrantrieb ausgebildet ist, wobei bei Ausgestaltung als hydraulischer Fahrantrieb jedem Achsabschnitt 37 eine Hydropumpe zugeordnet ist.

## Claims

1. A steerable track-laying chassis (1) including a right-side and left-side track-laying unit associated with a vehicle axle, wherein the vehicle axle accommodates at least one power-split transmission and each axle portion associated with one of the track-laying units is operatively connected to a hydraulic motor,
**characterised in that**
in dependence on the steering angle the volumetric displacements of the hydraulic motors (31, 32) are variable in such a way that the hydraulic medium (19) displaced from the one hydraulic motor (31, 32) is fed to the further hydraulic motor (32, 31).

2. A steerable track-laying chassis according to claim 1
**characterised in that**
the curve-inside hydraulic motor (31, 32) has a larger volumetric displacement and the curve-outside hydraulic motor (32, 31) has a smaller volumetric displacement.

3. A steerable track-laying chassis according to one of the preceding claims
**characterised in that**
the drive energy (P) is transmitted by way of a power-split transmission (60) associated with the vehicle axle (36) to the respective axle portions (37) mounting a track-laying unit (8) and wherein associated with each axle portion (37) is a transmission stage (44) coupled to the respective hydraulic motor (31, 32).

4. A steerable track-laying chassis according to claim 3
**characterised in that** the respective transmission stage (44) is in the form of a spur gear stage (43).

5. A steerable track-laying chassis according to claim 3
**characterised in that** the hydraulic motors (31, 32) associated with the axle portions (37) are connected together in a closed hydraulic circuit (49).

6. A steerable track-laying chassis according to claim 5
**characterised in that** with the same pivot angle (a) of the hydraulic motors (31, 32) which are integrated into the closed hydraulic circuit (49) the rotary speed of the track-laying units (8) associated with the respective vehicle axle (36) is the same.

7. A steerable track-laying chassis according to one of the preceding claims
**characterised in that** the travel drive determining the travel speed of the working machine (1) is not influenced by the change in speed of the right-side and left-side track-laying units (8) when negotiating a curve.

8. A steerable track-laying chassis according to one of the preceding claims
**characterised in that**
hydraulic medium (19) can be supplied to the closed hydraulic circuit (49) by way of an external pressure source (51).

9. A steerable track-laying chassis according to one of the preceding claims
**characterised in that**
the operating brake (59) associated with the working machine (1) assists with the steering movement.

10. A steerable track-laying chassis according to one of the preceding claims
**characterised in that**
actuation of the hydraulic motors (31, 32) provides for volumetric displacement compensation.

11. A steerable track-laying chassis according to one of the preceding claims
**characterised in that**
actuation of the hydraulic motors (31, 32) permits a controlled traffic.

12. A steerable track-laying chassis according to one of the preceding claims
**characterised in that**
the power-split transmission (60) is in the form of a differential transmission (33) or a hydraulic travel drive, wherein in the configuration in the form of a hydraulic travel drive a hydraulic pump is associated with each axle portion (37).

## Revendications

1. Train de roulement chenillé dirigeable comprenant un ensemble de chenille droite et gauche associé à un essieu de véhicule, l'essieu de véhicule recevant au moins une transmission à répartition de puissance et chaque portion d'essieu associée à un des ensembles de chenilles étant en liaison active avec un moteur hydraulique, **caractérisé en ce que** les volumes d'absorption des moteurs hydrauliques (31, 32) sont variables en fonction de l'angle de braquage, de façon que l'agent hydraulique (19) refoulé d'un des moteurs hydrauliques (31, 32) sont amené à l'autre moteur hydraulique (32, 31).

2. Train de roulement chenillé dirigeable selon la revendication 1, **caractérisé en ce que** le moteur hydraulique intérieur au virage (31, 32) présente un volume d'absorption supérieur et le moteur hydraulique extérieur au virage (32, 31) présente un volume d'absorption inférieur.

3. Train de roulement chenillé dirigeable selon une des revendications précédentes, **caractérisé en ce que** l'énergie d'entraînement (P) est transmise, par l'intermédiaire d'une transmission à répartition de puissance (60) associée à l'essieu de véhicule (36), aux portions d'essieu (37) recevant chacune un ensemble de chenille (8), et à chaque portion d'essieu (37) étant associé un étage de transmission (44) couplé au moteur hydraulique correspondant (31, 32).

4. Train de roulement chenillé dirigeable selon la revendication 3, **caractérisé en ce que** chaque étage de transmission (44) est conformé en étage de roues droites (43).

5. Train de roulement chenillé dirigeable selon la revendication 3, **caractérisé en ce que** les moteurs hydrauliques (31, 32) associés aux portions d'essieu (37) sont reliés entre eux sous la forme d'un circuit hydraulique fermé (49).

6. Train de roulement chenillé dirigeable selon la revendication 5, **caractérisé en ce que**, à angle de pivotement égal (a) des moteurs hydrauliques (31, 32) intégrés dans le circuit hydraulique fermé (49), la vitesse de rotation des ensembles de chenilles (8) associés à l'essieu de véhicule correspondant (36) est égale.

7. Train de roulement chenillé dirigeable selon une des revendications précédentes, **caractérisé en ce que** le groupe propulseur déterminant la vitesse de marche de la machine de travail (1) n'est pas influencé par la variation de vitesse des ensembles de chenilles droit et gauche (8) en virage.

8. Train de roulement chenillé dirigeable selon une des revendications précédentes, **caractérisé en ce que** de l'agent hydraulique (19) peut être amené au circuit hydraulique fermé (49) par l'intermédiaire d'une source de pression extérieure (51).

9. Train de roulement chenillé dirigeable selon une des revendications précédentes, **caractérisé en ce que** le frein de service (59) associé à la machine de travail (1) amplifie le mouvement directionnel.

10. Train de roulement chenillé dirigeable selon une des revendications précédentes, **caractérisé en ce que** l'actionnement des moteurs hydrauliques (31, 32) provoque une compensation d'absorption.

11. Train de roulement chenillé dirigeable selon une des revendications précédentes, **caractérisé en ce que** l'actionnement des moteurs hydrauliques (31, 32) permet un Controlled Trafic.

12. Train de roulement chenillé dirigeable selon une des revendications précédentes, **caractérisé en ce que** la transmission à répartition de puissance (60) est conformée en engrenage différentiel (33) ou en groupe propulseur hydraulique, en cas de conception comme groupe propulseur hydraulique une pompe hydraulique étant associée à chaque portion d'essieu (37).
